# FASCICULE DE BREVET EUROPEEN

(11) **EP 1 164 739 B1**
(45) Date de publication et mention de la délivrance du brevet: **21.05.2008**
(21) Numéro de dépôt: 01401527.5
(22) Date de dépôt: 13.06.2001
(51) Int. Cl.: H04L 1/00, H04L 1/08, H04L 7/04

(54) **Procédé de transmission de données avec code correcteur autosynchronisé, codeur et décodeur autosynchronisés, émetteur et recépteur correspondants**
Verfahren zur Datenübertragung mit autosychronisiertem Korrekturcode, autosychronisierte Coder und Decoder, sowie entsprechende Sender und Empfänger
Method for data transmission with autosynchronised correction code, autosynchronised encoder and decoder, corresponding transmitter and receiver

(30) Priorité: 14.06.2000 FR 0007563
(43) Date de publication de la demande: 19.12.2001
(73) Titulaire: Commissariat à l'Energie Atomique, 75015 Paris (FR)
(72) Inventeur: Laugeois, Marc, 38000 Grenoble (FR); Lattard, Didier, 38680 Rencurel (FR); Savel, Jean-Rémi, 38700 Corenc (FR); Bouvier des Noes, Mathieu, 38000 Grenoble (FR)
(74) Mandataire: Viering, Jentschura & Partner

(56) Documents cités:
- EP-A- 0 758 168
- EP-A- 0 847 169
- US-A- 4 811 361
- US-A- 5 854 840
- US-A- 5 983 383

## Description

### Domaine technique

La présente invention a pour objet un procédé de transmission de données avec code correcteur, autosynchronisé, un codeur et un décodeur autosynchronisés, ainsi qu'un émetteur et un récepteur correspondants.

L'invention trouve une application en télécommunications,

### Etat de la technique antérieure

Le brevet US-A-4 811 361 décrit un procédé de transmission de données numériques selon lequel chaque mot de donnée comprenant M bits est codé par chaque mot de code associé comprenant N bits, N étant supérieur à M, chaque mot de code étant destiné à être transmis en série, une succession-de mots de code formant un message, ledit message étant accompagné par au moins un indicateur transmis en série, ledit procédé de transmission étant caractérisé en ce que chacun desdits mots de code sélectionnés a les propriétés suivantes:
- il ne contient pas plus de quatre "1" logiques ou quatre "o" logiques consécutifs;
- il ne commence ni ne se termine par plus de deux "1 "' logiques ou plus de deux "o" logiques consécutifs;
- sa "charge", c'est-à-dire la différence algébrique entre le nombre de "1" logiques et le nombre de "o" logiques qui le constituent est au plus égale à 1 en valeur absolue et à 2 en valeur absolue si N est pair, tout indicateur comportant un nombre de bits égal à N ou un multiple de N et ayant les propriétés suivantes:

- il ne contient pas plus de quatre "1" logiques ou quatre "o" logiques consécutifs;
- il ne commence ni ne se termine par plus de deux "o" logiques consécutifs et;
- la distance de Hamming entre un indicateur et un forgé par toute séquence constituée par autant de bits consécutifs que l'indicateur, extraite d'un message quelconque est au moins égale à deux.

Lorsqu'un signal numérique se trouve perturbé lors de sa propagation, il est utile de prévoir une redondance dans le message transmis pour corriger les erreurs commises. Cette redondance peut être obtenue par un code correcteur d'erreurs. L'introduction d'un tel code nécessite une mise en trame des données, cette mise en trame étant prévue dans un protocole de communication. Elle n'est généralement pas réalisée dans ce qu'on appelle la couche physique (qui comprend les organes de modulation en bande de base) mais dans une couche de liaison particulière.

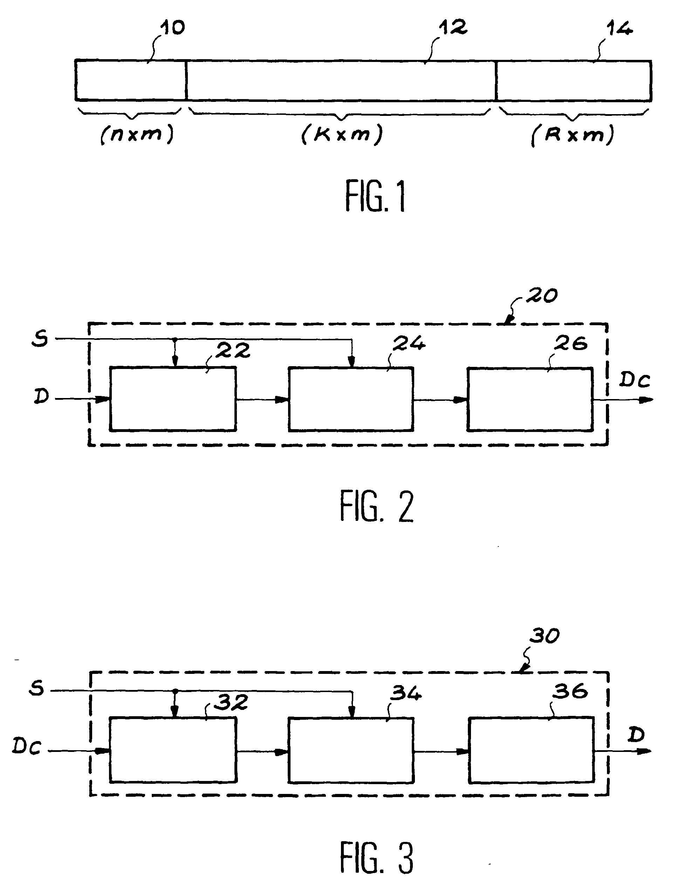

Les figures 1 à 5 annexées illustrent cette technique. Elles correspondent à des symboles d'information constitués de multiplets des bits, où m est un entier dépendant du code choisi, par exemple une puissance de 2, comme 8 (auquel cas le multiplet est un octet).

Sur la figure 1, tout d'abord, on voit le format d'une trame codée, en sortie d'un circuit de codage. La trame représentée comprend un en-tête 10 (qui est un mot de synchronisation de trame) constitué par n symboles de m bits chacun, un premier groupe 12 de K symboles de m bits et enfin un second groupe 14 de R symboles de m bits. Ce second groupe 14 est le code correcteur associé au premier groupe 12. Seul le premier groupe 12 représente l'information à transmettre, le second 14, constituant une redondance. Les nombres K et R sont caractéristiques du code correcteur employé. Par exemple, pour un code de Reed-Solomon, on indique la longueur totale du message en multiplets (soit K+R) et le nombre de multiplets de codage (R).

La figure 2 illustre un circuit de codage (ou codeur) permettant de constituer une telle trame. Tel qu'illustré, ce circuit 20 comprend un convertisseur série-parallèle 22, un codeur 24 et un convertisseur parallèle-série 26 (les convertisseurs 22 et 26 sont facultatifs). Un signal de synchronisation S commande les circuits 22 et 24. Les données à coder D sont introduites dans le convertisseur 22 et les données codées Dc sont extraites du convertisseur 26.

La figure 3 illustre le circuit de décodage correspondant (ou décodeur). Tel que représenté, ce circuit 30 comprend un convertisseur série-parallèle 32, un décodeur 34 et un convertisseur parallèle-série 36. Le signal de synchronisation S commande les circuits 32 et 34. Les données codées Dc sont appliquées au convertisseur 32 et les données décodées D sont extraites du convertisseur 36.

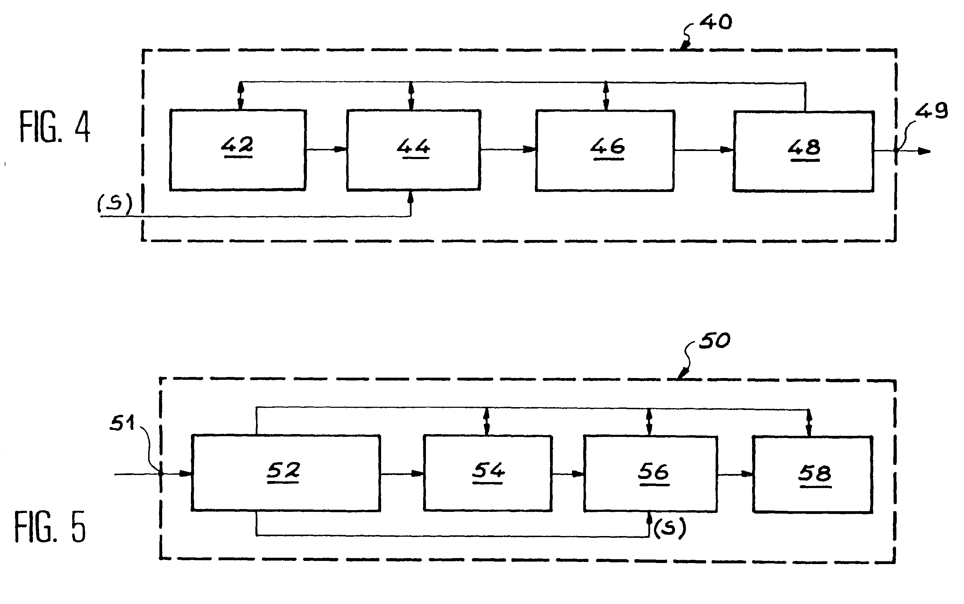

La figure 4 représente des moyens d'interfaçage entre les moyens de codage et les moyens de modulation. Cet interfaçage 40 comprend une mémoire tampon 42 ("buffer") contenant les données à coder, un codeur 44, une mémoire tampon 46, par exemple du type FIFO ("First In First Out"), et une interface de modulation 48 dont la sortie 49 est reliée aux moyens de modulation non représentés. La synchronisation du codeur 44 est assurée par le signal de synchronisation S.

La figure 5 illustre l'interfaçage démodulation-décodeur correspondant. Tel que représenté, cet interfaçage 50 comprend une entrée 51 reliée aux moyens de démodulation non représentés, un circuit 52 de séparation des trames et d'interface avec les moyens de démodulation, une mémoire tampon 54, par exemple de type FIFO, un décodeur 56, et une mémoire tampon de données 58. Le décodeur est commandé par le signal de synchronisation S.

Dans les circuits des figures 4 et 5, les mémoires FIFO 46 et 54 servent à adapter les débits des données entre le codeur et la modulation ou entre la démodulation et le décodeur.

En conclusion, dans cet art antérieur, l'utilisation d'un code correcteur nécessite des moyens particuliers. Si l'on utilise une liaison dépourvue de tels moyens et si l'on souhaite, pour améliorer les performances de la transmission, tirer profit du code correcteur, il faudra nécessairement rajouter des circuits de gestion.

La présente invention a justement pour but de remédier à cet inconvénient.

### Exposé de l'invention

A cette fin, l'invention propose un procédé dans lequel le code correcteur est autosynchronisé et ne nécessite donc pas d'ajout de circuits de gestion. Tout se passe dans la couche physique (codage et modulation ou démodulation et décodage). Les couches hautes du protocole n'ont plus à formater les trames car les données à émettre sont automatiquement associées à un en-tête et à un code correcteur. L'utilisateur n'a pas accès au paquet constitué et n'a donc pas à gérer les problèmes de synchronisation liés à la présence du code. Côté décodeur, celui-ci effectue une recherche d'un en-tête dans le train de bits fourni par l'étage de démodulation. Un algorithme de synchronisation permet une autosynchronisation fiable. Aucun interfaçage extérieur n'est nécessaire entre la modulation (ou la démodulation) et le codage (le décodage). L'adjonction d'un code correcteur sur une liaison n'en disposant pas initialement est donc une opération totalement transparente pour l'utilisateur. La configuration matérielle initiale n'est pas à revoir. Le circuit codeur et le décodeur se câblent directement respectivement avant le circuit de modulation en bande de base et après le circuit de démodulation.

De façon précise, l'invention a pour objet un procédé de transmission de données avec code correcteur autosynchronisé, dans lequel:
a) à l'émission :
   i) les données à transmettre étant constituées de bits ayant un rythme défini par un signal d'horloge (H), on forme des signaux de gestion de synchronisation comprenant :
      - un signal d'horloge symbole (HS) m fois moins rapide que le signal d'horloge (H), où m est un entier, m bits constituant un symbole d'information (S),
      - un signal de synchronisation (SS) marquant le premier symbole du paquet,
      - un signal d'interruption d'acquisition de données (ID) intervenant tous les K symboles, où K est un entier prédéterminé,
   ii) sous la commande du signal d'interruption d'acquisition de données (ID), on insère, avant un premier groupe de K symboles, un en-tête et, après ledit premier groupe, un second groupe de R symboles constituant un code correcteur correspondant aux K symboles du premier groupe, R étant un entier prédéterminé dépendant du type code correcteur utilisé, le premier et le second groupes de (R+K) symboles formant un paquet, et l'en-tête un en-tête propre à ce paquet,
   iii) on module et on émet de manière appropriée chaque paquet avec son en-tête,
b) à la réception:
   i) on démodule le signal reçu, et on en extrait le signal d'horloge bit (H),
   ii) à partir du signal démodulé, on met en oeuvre un processus de recherche d'en-tête dans les signaux démodulés et, lorsqu'un en-tête est détecté, on inhibe le processus de recherche d'en-tête, et on génère la commande de synchronisation (SS) marquant le premier symbole du paquet ;
   iii) sous la commande des signaux d'horloge symbole (HS) et de synchronisation de symbole (SS), on traite le paquet reçu, pour corriger les symboles éventuellement erronés du premier groupe à l'aide du code correcteur du second groupe, et on réactive le processus de recherche d'en-tête après chaque traitement de paquet,
   iv) à partir des symboles corrigés on restitue les données transmises.

Dans un mode de mise en oeuvre particulier,
a) à l'émission, la modulation s'effectue par étalement de spectre à l'aide de séquences pseudo-aléatoires,
b) à la réception, la démodulation s'effectue par corrélation avec les séquences pseudo-aléatoires utilisées à l'émission.

La présente invention a également pour objet un codeur autosynchronisé pour la mise en oeuvre du procédé à l'émission qui vient d'être défini. Ce codeur comprend :
i) des moyens pour former des signaux de gestion de synchronisation comprenant:
   - un signal d'horloge symbole (HS) m fois moins rapide qu'un signal d'horloge (H) rythmant les bits de données, où m est un entier, m bits constituant un symbole d'information (S)
   - un signal de synchronisation (SS) marquant le premier symbole du paquet,
   - un signal d'interruption d'acquisition de données (ID) intervenant tous les K symboles, où K est un entier prédéterminé,
ii) des moyens pour insérer, sous la commande du signal d'interruption d'acquisition (ID), avant un premier groupe de K symboles, un en-tête de paquet et, après ledit premier groupe, un second groupe de R symboles constituant un code correcteur affecté aux K symboles du premier groupe, R étant un entier prédéterminé dépendant du type code correcteur utilisé, le premier et le second groupes de (R+K) symboles formant un paquet, et l'en-tête un en-tête propre à ce paquet.

La présente invention a également pour objet un décodeur autosynchronisé pour la mise en oeuvre du procédé à la réception qui vient d'être défini. Ce codeur comprend :
i) des moyens pour constituer, à partir d'un paquet de données, un signal d'horloge (H), un signal d'horloge symbole (HS) et un signal de synchronisation de symbole (SS);
ii) des moyens pour mettre en oeuvre un processus de recherche d'en-tête dans le paquet démodulé et, lorsqu'un en-tête est détecté, pour inhiber la recherche d'en-tête et pour, sous la commande des signaux d'horloge symbole (HS) et le signal de synchronisation (SS) marquant le premier symbole du paquet, traiter le paquet reçu et pour corriger les symboles éventuellement erronés du premier groupe à l'aide du code correcteur du second groupe, et pour réactiver le processus de recherche d'en-tête après chaque traitement de paquet.

L'invention a encore pour objet un émetteur comprenant un module d'émission apte à moduler les données et à étaler le spectre de ces données par une séquence pseudo-aléatoire, et cet émetteur comprenant en outre, avant ledit module d'émission, le codeur autosynchronisé qui vient d'être défini.

L'invention a enfin pour objet un récepteur comprenant un module de réception apte à démoduler les données et à désétaler le spectre de ces données par une séquence pseudo-aléatoire, ce récepteur étant caractérisé en ce qu'il comprend en outre, après ledit module de réception, le décodeur autosynchronisé qui vient d'être défini.

Tous les codes correcteurs connus sont utilisables dans l'invention, et en particulier le code dit de Reed-Solômon.

### Brève description des dessins

- La figure 1, déjà décrite, montre un paquet de données comprenant K symboles d'informations de m bits chacun, R symboles de code correcteur de m bits chacun, un en-tête de paquet ;
- la figure 2, déjà décrite, montre un circuit de codage selon l'art antérieur ;
- la figure 3, déjà décrite, montre un circuit de décodage selon l'art antérieur ;
- la figure 4, déjà décrite, illustre un interfaçage connu entre les moyens de codage et les moyens de modulation ;
- la figure 5, déjà décrite, illustre un interfaçage connu entre les moyens de démodulation et les moyens de traitement du code correcteur ;
- la figure 6 illustre un mode particulier de réalisation d'un codeur autosynchronisé selon l'invention ;
- la figure 7 illustre un mode particulier de réalisation d'un décodeur autosynchronisé selon l'invention ;
- la figure 8 est un diagramme d'état relatif au processus de recherche d'en-tête ;
- la figure 9 illustre un exemple de réalisation d'un circuit réalisé par le Demandeur, travaillant en émission et/ou en réception, avec un code Reed-Solomon et une modulation par étalement de spectre à séquence directe.

### Description de modes particuliers de réalisation

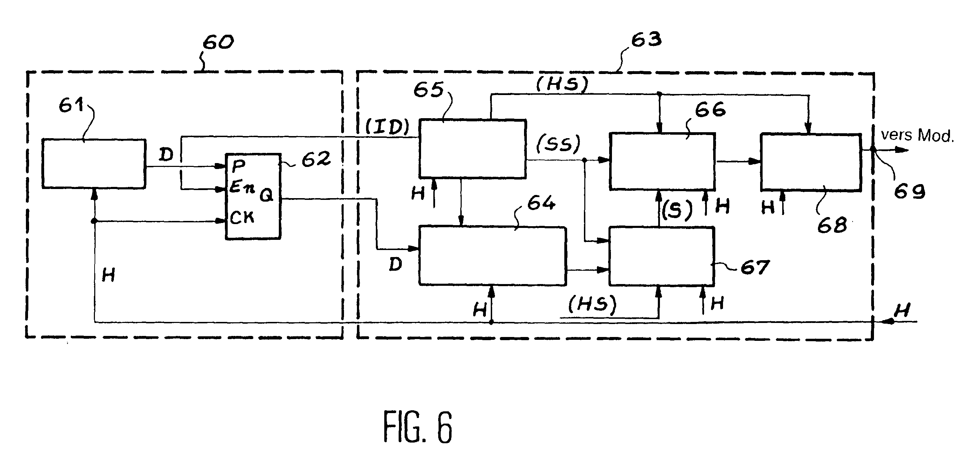

La figure 6 illustre l'architecture d'un codeur autosynchronisé selon l'invention avec une interface amont. L'interface amont 60 comprend une mémoire tampon 61 contenant les données à transmettre D et une bascule 62 avec trois entrées P, En et CK, et une sortie Q. Le codeur 63 proprement dit comprend un circuit 64 de traitement des données ayant pour fonction l'insertion d'un en-tête dans le flux des données, un circuit 65 de gestion automatique de la synchronisation, ce circuit délivrant trois signaux : un signal ID d'interruption de l'acquisition des données, un signal d'horloge symbole HS, m fois moins rapide que le signal d'horloge H et un signal de synchronisation de symbole SS repérant le début de chaque symbole. Le circuit 63 comprend encore un codeur 66 fonctionnant sur des multiplets (m bits, avec, par exemple, m = 8 s'il s'agit d'octets). Ce codeur reçoit les symboles S d'un convertisseur série-parallèle 67 (facultatif) et l'horloge symbole HS. Le codeur 66 délivre un flot de données organisées en symboles avec un en-tête, des symboles d'information et des symboles de redondance définis par le code correcteur utilisé. Le circuit 63 peut comprendre encore un convertisseur parallèle-série 68 dont la sortie 69 délivre les données qui seront ensuite traitées par les moyens de modulation non représentés.

L'entrée En de la bascule 62 permet d'interrompre le flux des données D grâce au signal ID délivré par le circuit 65. Cette interruption permet l'insertion de l'en-tête et l'ajout des symboles de codage. Le convertisseur série-parallèle 67 permet de constituer des symboles à m bits à partir des données (si m = 1, ce convertisseur est inutile).

L'horloge H rythmant les bits est fournie par l'étage de modulation.

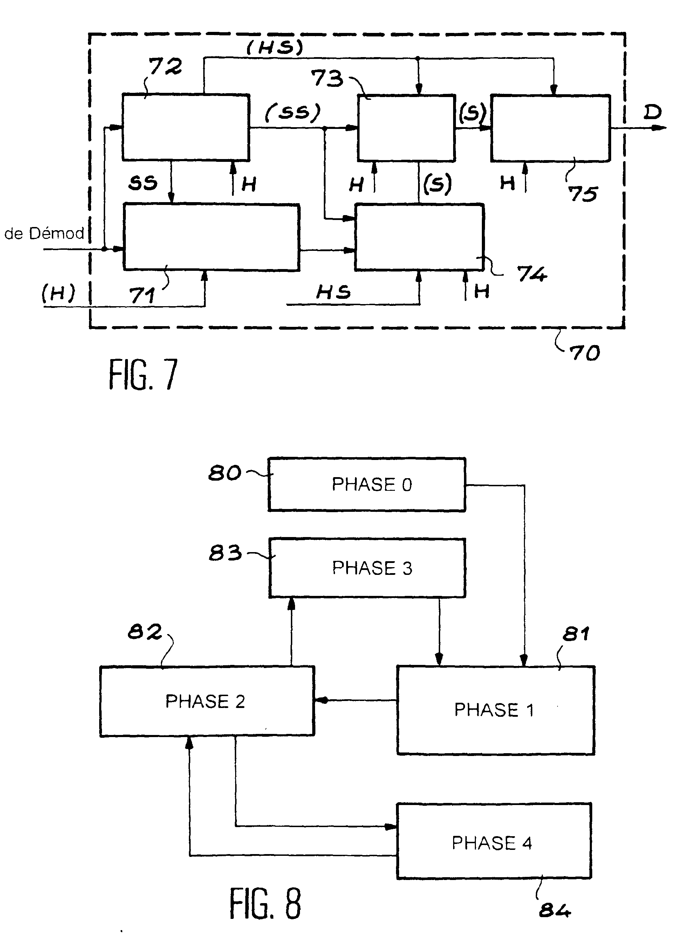

La figure 7 illustre l'architecture d'un décodeur autosynchronisé selon l'invention. Tel que représenté, ce décodeur 70 comprend un circuit 71 de suppression d'en-tête, recevant le train de bits issu des moyens de démodulation non représentés, un circuit 72 mettant en oeuvre un algorithme de détection d'en-tête et recevant le train de bits issu des moyens de démodulation et délivrant un signal d'horloge symbole HS et un signal de synchronisation SS marquant le premier symbole du paquet. Le circuit 70 comprend encore un convertisseur série-parallèle 74 (facultatif) recevant le signal d'horloge symbole HS, un décodeur 73 corrigeant les symboles éventuellement erronés et délivrant des symboles d'information corrigés, et enfin un convertisseur parallèle-série 75 délivrant les données finalement transmises. L'horloge bit H est fournie par les moyens de démodulation.

La figure 8 est un diagramme d'état illustrant l'algorithme de recherche d'en-tête dans le flot de données. Les blocs représentés correspondent chacun à une phase avec la correspondance suivante :
bloc 80 : Phase 0 (initialisation de recherche d'en-tête),
bloc 81 : Phase 1 (recherche d'un nouveau motif dans une durée inférieure ou égale à la durée d'un en-tête),
bloc 82 : Phase 2 (transmission d'un paquet ; inhibition de la recherche d'en-tête durant un paquet),
bloc 83 : Phase 3 (recherche d'un motif d'en-tête à la suite du paquet traité),
bloc 84 : Phase 4 (recherche d'en-tête directement à la suite du premier bit suivant le paquet).

Le déroulement du processus est alors le suivant. En début de processus, le signal d'inhibition est inactif. Cela signifie qu'on est en phase de recherche d'en-tête (phase 0).

Le flot de bits fourni par l'étage de démodulation est corrélé par la séquence binaire pseudo-aléatoire de l'en-tête. Si la corrélation dépasse un certain seuil, un drapeau est activé (phase 0 → phase 1). Lorsqu'une succession de motifs dans le train de bits apparaît comme un en-tête dans une durée inférieure ou égale à la durée de l'en-tête, le drapeau sera activé plusieurs fois (mxnxH) (phase 1). La synchronisation est alors effectuée sur le dernier motif (c'est-à-dire le dernier motif activant le drapeau) (on passe de la phase 1 à la phase 2).

La recherche d'en-tête est alors inhibée durant le temps de transmission d'un paquet (code correcteur inclus). Le drapeau ne peut pas être activé (phase 2). A la fin du paquet, le signal d'inhibition retombe dans l'état inactif, et une nouvelle recherche d'en-tête commence (on passe de la phase 2 à la phase 3 ou 4).

Si le drapeau est activé dès le premier bit suivant le paquet (phase 4), alors la synchronisation a lieu sur ce motif et l'inhibition de la recherche d'en-tête est à nouveau activée. Dans le cas contraire, on effectue la recherche comme en début d'algorithme (phase 3). Le passage de la phase 3 à la phase 1 s'effectue exactement de la même manière que le passage de la phase 0 à la phase 1.

On considère qu'on est en présence d'une succession d'en-têtes si le corrélateur dépasse plusieurs fois le seuil avec une durée entre deux dépassements inférieure ou égale à la durée de l'en-tête. Pour cela, une fenêtre de la durée de l'en-tête est ouverte (phase 1). Si aucun dépassement n'a eu lieu pendant cette durée, le système est synchronisé (on passe de la phase 1 à la phase 2). Si un dépassement a eu lieu, le fenêtre est à nouveau initialisée (on reste dans la phase 1).

Lors d'une transmission continue, un "compteur de confiance" peut être ajouté. Il rend compte de la fiabilité de la synchronisation. Son fonctionnement est le suivant : lorsqu'un en-tête est détecté immédiatement après le signal d'inhibition, le compteur est incrémenté. Le seuil sur le corrélateur de recherche d'en-tête peut alors être diminué.

Dans le cas contraire, il est décrémenté. Cela signifie que l'en-tête précédemment détecté n'était pas fiable, donc que le seuil était placé trop bas. Il faut donc augmenter le seuil.

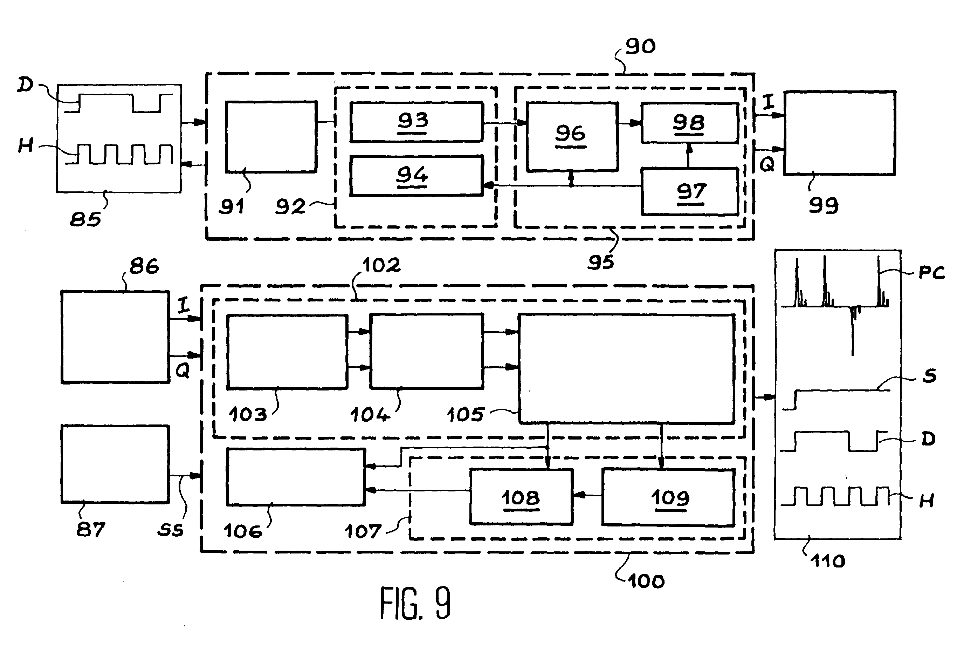

La figure 9, enfin, illustre un exemple de mise en oeuvre de l'invention dans le cas d'un codeur Reed-Solomon défini par K = 25 et R = 6 (il s'agit donc d'un code (31, 35), avec m = 8 (les symboles sont donc des octets). La modulation utilise la technique de l'étalement de spectre par séquence directe. Le circuit 90 correspond à un émetteur et le circuit 100 à un récepteur. L'ensemble correspond au circuit que le Demandeur désigne par "ICARE".

L'émetteur 90 reçoit les données symbolisées par le signal D et comprend un générateur de données 91, un module de synchronisation de code correcteur 92 comprenant un codeur Reed-Solomon 93 et un circuit de gestion de synchronisation 94. Il comprend encore un module 95 de modulation comprenant un modulateur 96 de type DQPSK ("Differential Quaternary Phase Shift Keying"), un bloc de mise en phase 97 de la séquence pseudo-aléatoire avec la donnée et un circuit d'étalement 98 des données modulées par 96 par la séquence produite par 97.

Cet émetteur 90 produit des signaux I et Q en bande de base respectivement en phase et en opposition de phase avec une porteuse et qui viendront moduler une porteuse RF symbolisée par le bloc 99. L'émetteur 90 produit également des signaux d'horloge H symbolisés dans le bloc 85.

Le récepteur 100 reçoit les signaux en bande de base I et Q symbolisés par le bloc 86 et des signaux de synchronisation symbolisés par le bloc 87. Il comprend un module de réception 102 comprenant un filtre 103 adapté à la séquence pseudo-aléatoire utilisée à l'émission, un circuit 104 de démodulation différentielle (DQPSK), un circuit 105 d'estimation du canal de transmission, de détection des pics de corrélation (PC), de restitution des données D, de formation d'un signal de synchronisation (S) et d'une horloge (H), tous signaux représentés schématiquement dans le bloc 110. Le récepteur 100 comprend encore un module décodeur autosynchronisé 107, comprenant un décodeur Reed-Solomon 108 et un circuit 109 de détection d'en-tête et d'autosynchronisation 109. Dans le mode de réalisation illustré, le module est précédé d'un générateur testeur de données 106.

Dans l'émetteur, le module 92 correspond au circuit 63 de la figure 6 et, dans le récepteur, le module 107 correspond au circuit 70 de la figure 7. Les autres moyens sont classiques en technique d'étalement de spectre à séquence directe et sont bien connus de l'homme de l'art.

## Revendications

1. Procédé de transmission de données avec code correcteur autosynchronisé, dans lequel:
a) à l'émission :
i) les données à transmettre étant constituées de bits ayant un rythme défini par un signal d'horloge (H), on forme des signaux de gestion de synchronisation comprenant:
• un signal d'horloge symbole (HS) m fois moins rapide que le signal d'horloge (H), où m est un entier, m bits constituant un symbole d'information (S),
• un signal de synchronisation (SS) marquant le premier symbole du paquet,
• un signal d'interruption d'acquisition de données (ID) intervenant tous les K symboles, où K est un entier prédéterminé,
ii) sous la commande du signal d'interuption d'acquisition de données (ID), on insère, avant un premier groupe de K symboles, un en-tête et, après ledit premier groupe, un second groupe de R symboles constituant un code correcteur correspondant aux K symbols du premier groupe, R étant un entier prédéterminé dépendant du type code correcteur utilisé, le premier et le second groupes de (R+K) symboles formant un paquet, et l'entête est un en-tête propre à ce paquet,
iii) on module et on émet de manière appropriée chaque paquet avec son en-tête,
b) à la réception:
i) on démodule le signal reçu, et on extrait le signal d'horloge bit,
ii) à partir du signal démodulé, on met en oeuvre un processus de recherche d'en-tête dans les signaux démodulés et, lorsqu'un en-tête est détecté, on inhibe le processus de recherché d'en-tête, et on génère la commande de synchronisation (SS) marquant le premier symbole du paquet,
iii) sous la commande des signaux d'horloge symbole (HS) et de synchronisation de symbole (SS), on traite le paquet reçu, pour corriger les symboles éventuellement erronés du premier groupe à l'aide du code correcteur du second groupe, et on réactive le processus de recherche d'en-tête après chaque traitement de paquet,
iv) à partir des symboles corrigés on restitue les données transmises.

2. Procédé selon la revendication 1, dans lequel :
a) à l'émission, la modulation s'effectue par étalement de spectre à l'aide de séquences pseudo-aléatoires,
b) à la réception, la démodulation s'effectue par corrélation avec les séquences pseudo-alétoires utilisées à l'emission.

3. Procédé selon la revendication 1, dans lequel le code correcteur est un code du type Reed-Solomon.

4. Codeur autosynchronisé comprenant des moyens adaptés à la mise en oeuvre de toutes les étapes du procédé relatif à l'émission selon la revendication 1.

5. Décodeur autosynchronisé comprenant des moyens adaptés à la mise en oeuvre de toutes les étapes du procédé relatif a la réception selon la revendication 1.

6. Emetteur pour la mise en oeuvre du procédé à l'emission selon la revendication 1, comprenant un module d'émission (95) apte à moduler les données et à étaler le spectre de ces données par une séquence pseudo-aléatoire, et comprenant en outre, avant ledit module d'émission, un codeur autosynchronisé (92) selon la revendication 4.

7. Récepteur pour la mise en oeuvre du procédé à la reception selon la revendication 1, comprenant un module de réception (102) apte à démoduler les données et à désétaler le spectre de ces données par une séquence pseudo-aléatoire, et comprenant en outre, après ledit module de réception, un décodeur autosynchronisé (100) selon la revendication 5.

## Claims

1. Data transmission process with auto-synchronised correcting code, wherein:
a) at transmission:
i. the data to be transmitted being constituted by bits having a timing defined by a clock signal (H), synchronisation management signals are formed, comprising:
- a symbol clock signal (HS) m times less fast than the clock signal (H), where m is an integer, m bits constituting an information symbol (S),
- a synchronisation signal (SS) designating the first symbol of the packet,
- a data acquisition interruption signal (ID) intervening every K symbols, where K is a predetermined integer,
ii. under the control of the data acquisition interruption signal (ID), a header is inserted before a first group of K symbols, and following said first group a second group of R symbols is inserted constituting a correcting code corresponding to the K symbols of the first group, R being a predetermined integer depending on the type of correcting code used, the first and second groups of (R+K) symbols forming a packet, and the header is a header specific to said packet,
iii. each packet is modulated and transmitted in an appropriate manner with its header,
b) at reception:
i. the signal received is demodulated and the bit clock signal is extracted,
ii. from the demodulated signal, a header search process is implemented in the demodulated signals, and, when a header is detected, the header search process is inhibited, and the synchronisation control (SS) is generated designating the first packet symbol;
iii. under the control of the symbol clock (HS) and symbol synchronisation (SS) signals, the received packet is processed, so as to correct any erroneous symbols of the first group by means of the correcting code of the second group, and the header search process is reactivated after each packet processing,
iv. from the corrected symbols the transmitted data are received.

2. Process according to claim 1, wherein:
a) at transmission, modulation is carried out by spread spectrum by means of pseudo-random sequences,
b) at reception, demodulation is carried out by correlation with the pseudo-random sequences used at transmission.

3. Process according to claim 1, wherein the correcting code is a code of the Reed-Solomon type.

4. Auto-synchronised coder comprising means adapted for implementing all steps of the process with regard to the transmission according to claim 1.

5. Auto-synchronised decoder comprising means adapted for implementing all steps of the process with regard to the reception according to claim 1.

6. Transmitter for implementing the process at the transmission according to claim 1, comprising a transmission module (95) which is able to modulate the data and to spread the spectrum of this data by a pseudo-random sequence, and comprising in addition before said transmission module an auto-synchronised coder (92) according to claim 4.

7. Receiver for implementing the process at the reception according to claim 1, comprising a reception module (102) which is able to demodulate the data and to de-spread the spectrum of this data by a pseudo-random sequence, and comprising in addition, after said reception module, an auto-synchronised decoder (100) according to claim 5.

## Patentansprüche

1. Verfahren zum Senden von Daten mit autosynchronisiertem Korrektur-Code, wobei:
a) beim Senden:
i. die zu sendenden Daten aus Bits gebildet sind, mit einem von einem Taktsignal (H) definierten Takt, und Synchronisations-Verwaltungs-Signale gebildet werden, die aufweisen:
- ein Symbol-Taktsignal (HS), das m Mal weniger schnell ist als das Taktsignal (H), wobei m eine ganze Zahl ist, und wobei m Bits ein Informations-Symbol (S) bilden,
- ein Synchronisations-Signal (SS), das das erste Symbol des Pakets kennzeichnet,
- ein Datenerfassungs-ünterbrechungssignal (ID), das alle K Symbole interveniert, wobei K eine vorgegebene ganze Zahl ist
ii. unter dem Befehl des Datenerfassungs-Unterbrechungssignals (ID) vor einer ersten Gruppe von K Symbolen ein Header und nach der ersten Gruppe eine zweite Gruppe von R Symbolen eingefügt werden, einen Korrektur-Code bildend, der den K Symbolen der ersten Gruppe entspricht, wobei R eine vorgegebene ganze Zahl ist, die von der Art des verwendeten Korrektur-Codes abhängt, wobei die erste Gruppe und die zweite Gruppe mit (R+K) Symbolen ein Paket bilden, und wobei der Header ein dem Paket eigener Header ist,
iii. auf geeignete Weise jedes Paket mit seinem Header moduliert und gesendet wird,
b) beim Empfang:
i. das empfangene Signal demoduliert wird, und das Bit-Takt-Signal extrahiert wird,
ii. ausgehend von dem demodulierten Signal ein Header-Such-Prozess in den demodulierten Signalen durchgeführt wird, und, wenn ein Header detektiert wird, der Header-Such-Prozess gehemmt wird und der Synchronisierungs-Befehl (SS) generiert wird, der das erste Symbol des Pakets kennzeichnet,
iii. unter dem Befehl des Symbol-Takt-Signals (HS) und des Symbol-Synchronisierungs-Signals (SS) das empfangene Paket zum Korrigieren der möglicherweise fehlerhaften Symbole der ersten Gruppe mit Hilfe des Korrektur-Codes der zweiten Gruppe verarbeitet wird, und der Header-Such-Prozess nach jeder Paket-Verarbeitung reaktiviert wird,
iv. ausgehend von den korrigierten Symbolen die gesendeten Daten wiederhergestellt werden.

2. Verfahren gemäß Anspruch 1, wobei
a) beim senden die Modulation durch Spektrumspreizung mit Hilfe von Pseudozufalls-Sequenzen erfolgt,
b) beim Empfangen die Demodulation durch Korrelation mit den beim Senden verwendeten Pseudozufalls-Sequenzen erfolgt.

3. Verfahren gemäß Anspruch 1, wobei der Korrektur-Code ein Code des Reed-Solomon-Typs ist.

4. Autosynchronisierter Kodierer, der Mittel aufweist, die zum Durchführen aller Schritte des Verfahrens in Bezug auf das Senden gemäß Anspruch 1 angepasst sind.

5. Autosynchronisierter Dekodierer, der Mittel aufweist, die zum Durchführen aller Schritte des Verfahrens in Bezug auf den Empfang gemäß Anspruch 1 angepasst sind.

6. Sender zum Durchführen des Verfahrens beim Senden gemäß Anspruch 1, der ein Sendemodul (95) aufweist, das fähig ist zum Modulieren der Daten und zum Spreizen des Spektrums der Daten durch eine Pseudozufalls-Sequenz, und der ferner vor dem Sendemodul einen autosynchronisierten Kodierer (92) gemäß Anspruch 4 aufweist.

7. Empfänger zum Durchführen des Verfahrens beim Empfang gemäß Anspruch 1, der ein Empfangsmodul (102) aufweist, das fähig ist zum Demodulieren der Daten und zum Entspreizen des Spektrums der Daten durch eine Pseudozufalls-Sequenz, und der ferner nach dem Empfangsmodul einen autosynchronisierten Dekodierer (100) gemäß Anspruch 5 aufweist.
